# EUROPEAN PATENT APPLICATION

(11) **EP 1 643 766 A1**
(43) Date of publication of application: **05.04.2006**
(21) Application number: 04745639.7
(22) Date of filing: 07.06.2004
(51) Int. Cl.: H04N 5/92, G11B 20/10, G11B 27/00

(54) **INFORMATION RECORDING DEVICE, INFORMATION RECORDING METHOD, INFORMATION TRANSMISSION DEVICE, AND INFORMATION TRANSMISSION METHOD**

(30) Priority: 08.07.2003 JP 2003193567
(71) Applicant: Pioneer Corporation, Tokyo 153-8654 (JP)
(72) Inventor: TADA, Kenichiro, Tokorozawa-shi, Saitama 3590047 (JP)
(74) Representative: Tappe, Hartmut
(86) International application number: PCT/JP2004/007929
(87) International publication number: WO 2005/004475

(57) **Abstract**

There is provided an information recording device used for receiving digital broadcast and recording it. The information recording device may assuredly detect lack of information indicating a discontinuous point of a program in information to be recorded and record the information in a correct program configuration. When recording a partial TS, which includes a plurality of events and outputted from a set top box, into a recording device, an event reference number flag designating an event output sequence is extracted from the input while the number of events actually, inputted as partial TS, are counted. The calculation result is compared to the event number designated by the event reference number flag. When the calculated result is different from the event number, it is recognized that the event border information lacks and a partial TS is inputted.

## Description

### TECHNICAL FIELD

The present invention relates to an information recording apparatus and an information recording method, more concretely, the invention relates to an information recording apparatus for recording information which is outputted from an output device as recording information tobe recorded, an information recording method, and a technical field thereof.

### BACKGROUND ART

In recent years, digital broadcast such as so-called digital high vision broadcast is starting. In correlation to a recent tendency that recording density of recording media is heightened, it is conducted that this digital broadcast originally with high image quality is received by a receiving apparatus such as a set top box, and thereafter the received digital broadcast is sent to an information recording and reproducing apparatus such as a recorder while maintaining its image quality and recorded in an optical disc or a hard disc.

Generally in view of convenience, when a program which is sent as the digital broadcast is received and recorded, it is necessary to detect caesuras (changing points) of the programs and insert, for example, an index or a title when a program which is broadcasted as the digital broadcast is received.

In the conventional technique, as a conventional method of detecting a changed point of the program as described, there is a technique described in Japanese Unexamined Patent Publication No. JP-A-11-239185 to treat a so-called partial transport stream in an MPEG 2 method.

Patent Document 1: Japanese Unexamined Patent Publication No. JP-A-11-239185(Figures 1 and 5)

According to the methods described in Patent Document 1, by inserting a Discontinuity Information Table(DIT) Program Clock Reference (PCR) at the changed points of so-called Program Specific Information(PSI) or Section Information(SI), the changed points of the program are detected at a time of reproducing.

However, according to the method disclosed in the above described conventional technique, when a plurality of programs are transmitted from a receiving apparatus to an information recording and reproducing apparatus, there may occur a case where the above DIT drops in course of transmission by reason of, for example, a noise ona transmission channel. On this occasion, in the conventional technique, there has been no means to detect the drop of the DIT, and therefore the plurality of programs which should be recognized as different programs in the information recording and reproducing apparatus are erroneously recognized as a continuous programs and recorded into an optical disc or the like.

This matter causes an issue that the structure of the programs are unintentionally changed and recorded. There is a problem that convenience is extremely deteriorated at a time of reproducing.

### DISCLOSURE OF THE INVENTION

### Problems to be Solved by the Invention

Therefore, the present application is provided in consideration of the above problems and, concerning one example of the problems, to provide an information recording apparatus and method which can record various information pieces in an accurate program structure state by certainly detecting a drop of an information piece which designates a change point of the program inside the information to be recorded in a case where digital broadcast is received and recorded.

### Means of Solving the Problem

In order to solve the problem, according to the invention recited in Claim 1 has an adding device which adds border information, which designates a boarder between a partial recording information piece and another partial recording information piece, to recording information, the recording information including a plurality of partial recording information pieces; and
a transmitting device which transmits the recording information with the border information added thereto and transmission order information designating a transmitting order of the partial recording information pieces.

Accordingly, since the border information is added to the recording information, and the recording information is transmitted along with the transmission order information, if a structure of comparing a relationship between the border information and the transmission order information is adapted, when the result of the comparison is inconsistent, it is possible to assuredly recognize that the border information lacks on a transmission route of various information on the receiver' s side.

In order to solve the above problem, the invention recited in Claim 2 is based on the information transmitting apparatus according to claim 1 and further has a first transmitting device which transmits the transmission order information using a transmission method, by which it is assured that information arrives at where the information is transmitted; and a second transmitting device which transmits the recording information using a transmission method different from that for the transmission order information.

Accordingly, the transmission order information is transmitted by a transmitting method, by which it is assured that information arrives at where the information is transmitted and the recording information is transmitted by a transmitting method which is different from the transmission order information. Therefore, it is possible to transmit the transmission order information by a transmission method, which is more secure than the recording information, to which the border information is added. Therefore, it is possible to assuredly recognize a drop of the border information in these receiving parties.

In order to solve the above problem, the invention recited in Claim 3 is based on an information recording apparatus which receives input of recording information having a plurality of partial recording information pieces and boarder information designating a border of the partial recording information pieces and transmission order information designating an order of transmitting the partial recording information, and records at least the recording information to a recording medium, and has an erroneous detection detecting device which detects an erroneous detection of the boarder information on the basis of the transmission order information.

Accordingly, it is possible to assuredly recognize the drop of the border information on the transmission paths of the various information by detecting erroneous detection of the border information on the basis of the transmission order (information) information.

In order to solve the above problem, the invention recited in Claim 4 is based on an information recording apparatus according to claim 3, and has the erroneous detection detecting device has a counting device which counts a number of the border information; and a comparison device which compares a counted value obtained by the counting device and a value of the transmission order information. '

Accordingly, a number of the border information is counted and the result and a value of the transmission order information are compared, it is possible to assuredly recognize the drop of the border information with a simple structure.

In order to solve the above problem, the invention recited in Claim 5 is based on an information recording apparatus according to claim 3 or 4, and further has a generation device which generates control information on the basis of the border information; a correction device which corrects the control information for controlling the recording information that is recorded when an erroneous detection of the border information is detected; and a recording device which records the control information thus corrected onto the recording medium.

Accordingly, since the management information is corrected when an erroneous detection of the border information is detected, it is possible to constantly maintain a content of the control information and a recording information piece which are consistent.

In order to solve the above problem, the invention recited in Claim 6 is based on an information recording apparatus according to claim 5, and further has an adding device which adds time information to the recording information that is recorded onto the recording medium, wherein the correcting device detects a discontinuous point of time information, which time information is added to the recording information, and regenerates the control information by regarding the discontinuous point thus detected as a border of the partial recording information piece.

Accordingly, the control information is regenerated by assuredly detecting a border of the partial recording information pieces since the time information is added to the recording information to be recorded onto the recording medium, a discontinuous point of the time information thus added is detected, and the management information is regenerated by regarding the detected discontinuous point as the border of the partial recording information.

In order to solve the above problem, the invention recited in Claim 7 has an adding step of adding border information designating a border between a partial recording information piece and another partial recording information piece to recording information which includes a plurality of partial recording information pieces; and a transmitting step of transmitting the recording information with the border information added thereto and transmission order information which designates a transmission order of the partial recording information pieces.

Accordingly, since the border information is added to the recording information and the recording information and the transmission order information are transmitted, if a structure of comparing a relationship between the border information and the transmission order information is compared, it is possible to assuredly recognize a drop of border information on a transmission paths of each information by the receiver's side when the relation shows inconsistency.

In order to solve the above problem, the invention recited in Claim 8 is based on an information recording method which inputs recording information including a plurality of partial recording information pieces, boarder information which designates a boarder of the partial recording information pieces, and transmission order information which designates a transmission order of the partial recording information pieces, and recording at least the recording information onto a recording medium, and has an erroneous detection detecting process for detecting an erroneous detection of the border information on the basis of the transmission order information.

Accordingly, since the erroneous detection of the border information is detected based on the transmission order (information) information, it is possible to assuredly recognize a drop of border information on transmission paths of each information.

### BRIEF DESCRIPTION OF THE DRAWINGS

[Figure 1] Figure 1 is a block-diagram showing a schematic structure of a broadcast receiving and recording system according to an embodiment.
[Figure 2] Figure 2 is a block diagram showing a detailed structure of the set top box according to the embodiment.
[Figure 3] Figure 3 is a block diagram showing a detailed structure of an information recording and reproducing apparatus according to the embodiment.
[Figure 4] Figure 4 is a schematic structure showing a recording format according to the embodiment.
[Figure 5] Figure 5 is a schematic structure of a relation between a recording format and a physical format according to the embodiment.
[Figure 6] Figure 6 is a flowchart showing an entire recording stream generation process according to the embodiment.
[Figure 7] Figure 7 is a flowchart showing a time normalizing process according to the embodiment.
[Figure 8] Figure 8 is a flowchart showing an event recognizing process according to the embodiment.
[Figure 9] Figure 9 is a flowchart showing an event change detection process according to the embodiment.
[Figure 10] Figure 10 is a flowchart for showing an stream sending process according to the embodiment.
[Figure 11] Figure 11 is a schematic structure of a mode of a recording stream according to the embodiment.
[Figure 12] Figure 12 is a flowchart showing an entire recording process according to the embodiment.
[Figure 13] Figure 13 is a flowchart showing a packet recording process according to the embodiment.
[Figure 14] Figure 14 is a schematic structure of a mode of a hard disc after recording according to the embodiment.
[Figure 15] Figure 15 is a figure (I) showing a recording mode of for example a unit information piece of the embodiment.
[Figure 16] Figure 16 is a flow chart showing a management information recording process according to the embodiment.
[Figure 17] Figure 17 is a figure showing a recording process of the embodiment.
[Figure 18] Figure 18 is a display example of the unit information piece according to the embodiment.
[Figure 19] Figure 19 is a figure (II) showing a recording mode of for example a unit information piece of the embodiment.
[Figure 20] Figure 20 is a flow chart showing an accident detecting process according to the embodiment.

### Description of Reference Numerals

- 1: DIGITAL BROADCAST RECEIVING SECTION
- 2: DEMULTIPLEXER
- 3,23: MICROCOMPUTER
- 5: GRAPHICS SECTION
- 6: IMAGE DECODING SECTION
- 9: OSD SECTION
- 10,20: HSI SECTION
- 11,25: REMOTE CONTROLLER LIGHT RECEIVING SECTION
- 12,26: REMOTE CONTROL SECTION
- 21: REPRODUCTION CONTROL SECTION
- 22: RECORDING SECTION
- 24: HARD DISC SECTION
- S: BROADCAST RECEIVING AND RECORDING APPARATUS
- ST: SET TOP BOX
- SR: INFORMATION RECORDING AND REPRODUCING APPARATUS
- B: NETWORK
- HD: HARD DISC

### BEST MODES FOR CARRYING OUT THE INVENTION

Next, a preferred embodiment of the invention will be described in reference of the figures.

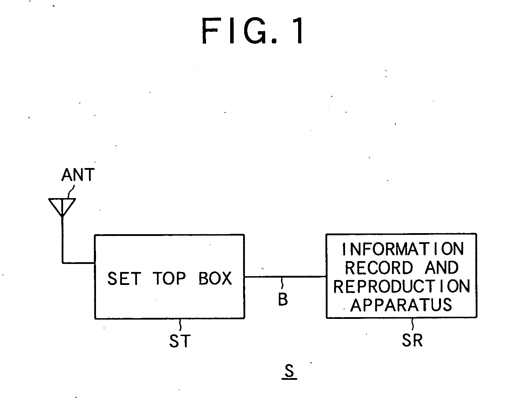

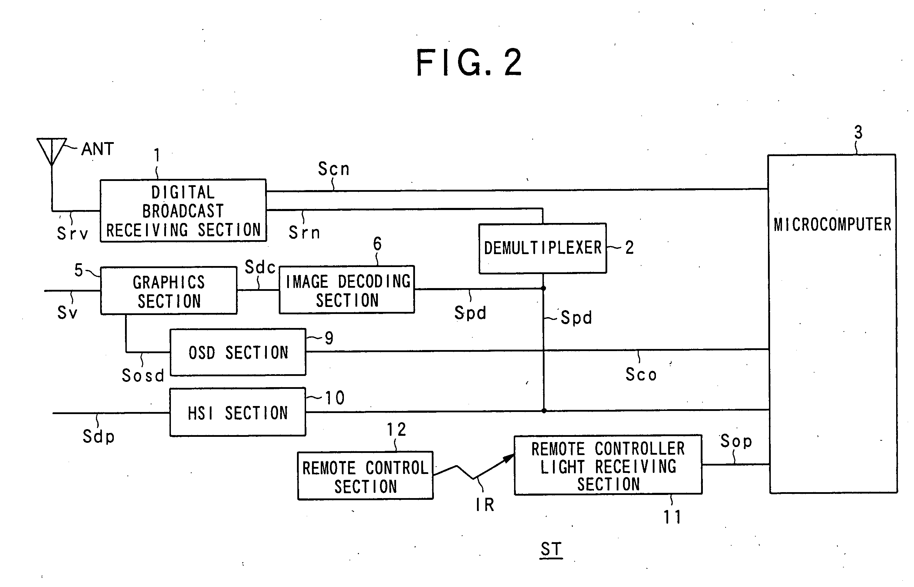

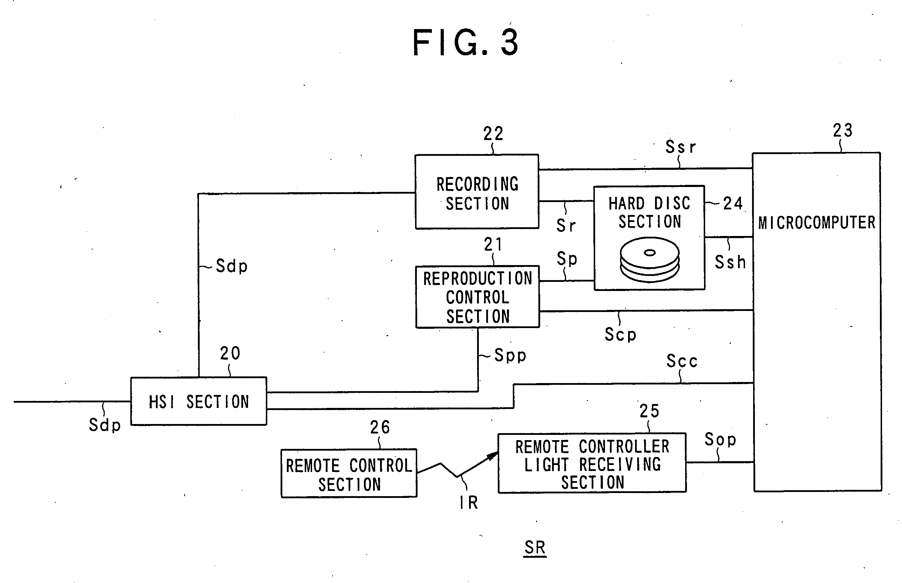

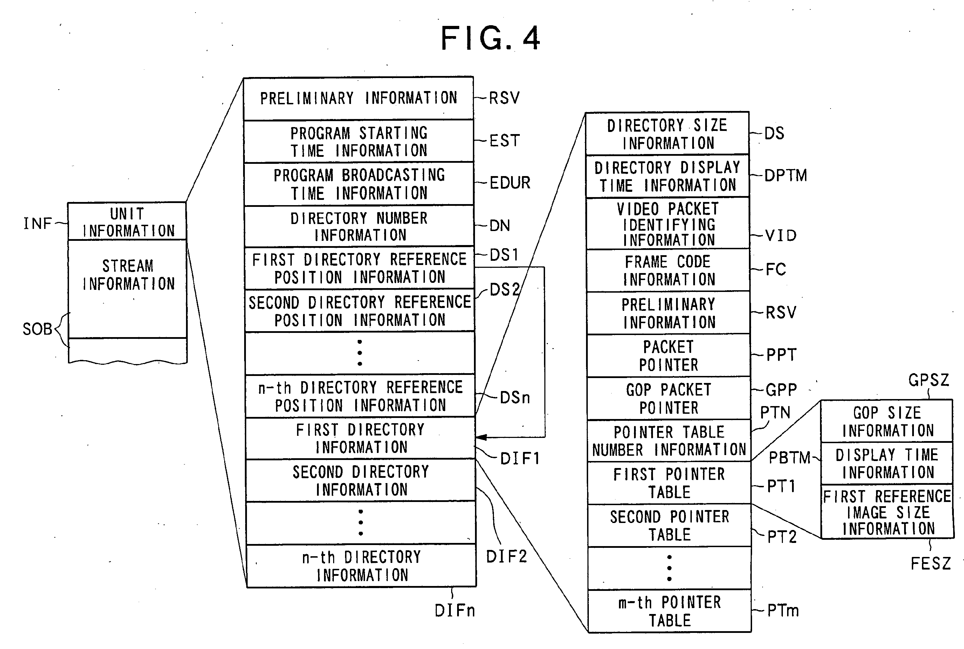

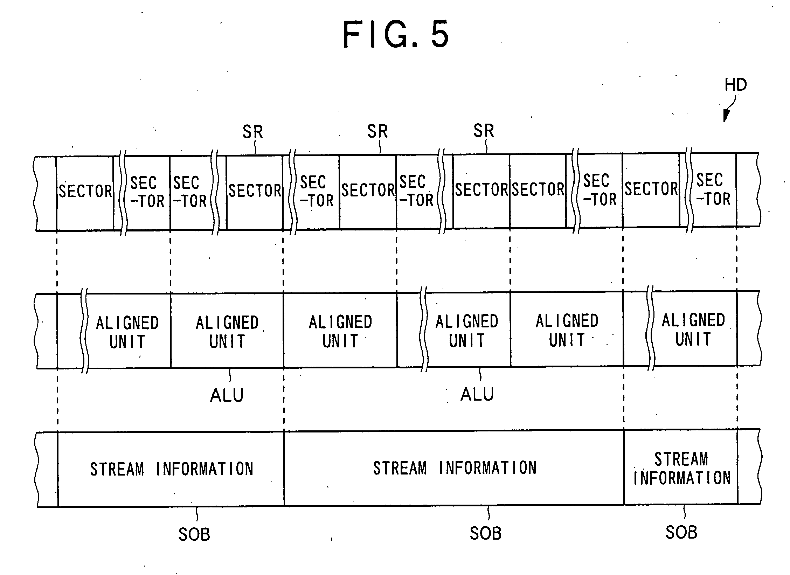

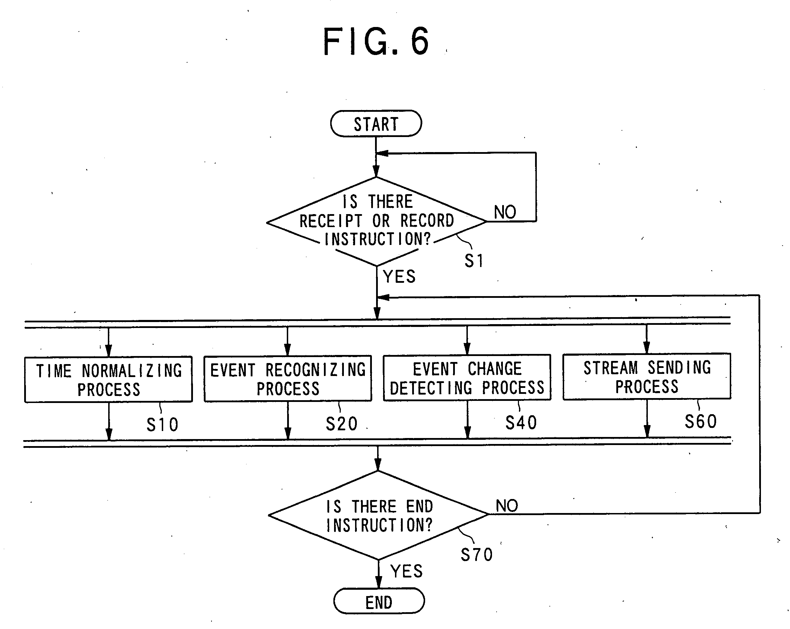

The embodiment described below is about an embodiment in a case where the present invention is applied a broadcast receiving and recording system which is made up of an information output device(so-called set top box) which receives a broadcasting program which is sent via broadcasting radio waves of a so-called digital television broadcast using an MPEG method as a compression method (hereinafter simply referred to as a digital broadcast) and outputs a received information piece corresponding to the received broadcast program and an information recording device which acquires the received information from the receiving device and recording the obtained information piece into the recording medium.
(I) Entire Structure of broadcast receiving and recording system
   First, the entire structure of the broadcast receiving and recording system according to the embodiment will be described in reference of Figures 1 to 4. Figures 1 to 3 are block charts showing a schematic structure of the broadcast receiving and recording system, and Figure 4 shows a recording format used for recording a broadcast program included in received airwaves.
   As shown in Figure 1, the broadcast receiving system S according to the embodiment records in use of a set top box ST for providing a necessary signal decoding to the airwaves which are received via an antenna ANT and the above information recording and reproducing apparatus SR which receives the above recording stream through a network B formed by a serial bus, an internet protocol(IP) and the like, and records this into a recording medium such as a hard disc and reproduces this.
   Next, a detailed structure of the set top box ST and the information recording and reproducing apparatus SR will be described.
   First, as shown in Figure 2, the set top box ST according to the embodiment is formed by a digital broadcast receiving section 1, a demultiplexer 2, a micro computer (hereinafter referred to as micon) 3, a graphics section 5, an image decoding section 6, an on screen display (OSD) section 9, a high speed interface (HSI) section 10, a remote controller section 12 which can be carried, and a remote controller light receiving section 11 which receives an information piece which is sent in use of an infrared light.
   Next, an entire operation will be described.
   First, a total operation in a case where the set top box ST receives a digital information piece which is broadcasted by the above airwaves and on air and outputs the information to the information recording and reproducing apparatus SR through a network B, and simultaneously the contents and the like of the received digital broadcast are displayed when necessary will be described.
   When an output process and the like of the digital information are done, the antenna ANT first receives airwaves, generates a receiving signal Srv corresponding to the received airwaves, and outputs it to the digital broadcast receiving section 1.
   Next, when an operation of starting the output process is conducted in the remote controller section 12, an infrared ray IR which is emitted from the remote controller section 12 is received by the remote controller light receiving section 11 in correspondence with the starting operation, and thereby the micro computer section 3 generates control information Scn so as to output it to the network B in receipt of the digital information which is designated in the starting operation and outputs the control information Scn into the digital broadcast receiving section 1.
   Accordingly, the digital broadcast receiving section 1 selects the digital information piece corresponding to a channel which is desired in the received digital information under a control by the microcomputer section 3 in receipt of the control information Scn and outputs it to the demultiplexer 2 as digital information Srn. Simultaneously, the digital broadcast receiving section 1 detects PID (Packet ID) respectively of packets which form the digital information in the selected channel and outputs it to the microcomputer section 3 as the control information Scn.
   Next, the demultiplexer 2 extracts digital information which should be outputted into the information recording and reproducing apparatus SR out of the digital information Srn and outputs it to the image decoding section 6, the HSI section 10 and the microcomputer 3 as the recording information Spd at a recording rate which is previously set.
   Therefore, the image decoding section 6 decodes the digital information which is contained in the recording information Spd and outputs it into the graphics section 5 as the decoding information Sdc.
   The graphics section 5 processes the image information which is contained in the decoding information Sdc, makes an image corresponding to the image information thus processed display on a display which is not shown and provided outside as the display information Sv as an analogue signal.
   Meanwhile, the voice information included in the record information Spd is decoded by the voice decoding section(not shown) and thereafter outputted into and propagated from an outside speaker (not shown) along with the process of images in the image decoding section 6 and the graphics section 5.
   Further, sub images such as a closed caption or specifications of display which cor re spend to the images included in the decoding information Sdc are separately generated in the OSD section 9 and outputted into the graphics section 5 as OSD information Sosd into the graphics section 5.
   The graphics section 5 superposes the sub images included in the OSD information Sosd on the above-mentioned decoding information Sdc when necessary and generates image information included in the display information Sv by combining the OSD information Sosd and the decoding information Sdc.
   At the same time, the HSI section 10 to which the recording information Spd is inputted provides an interface treatment in a digital like manner to the recording information Spd under a control by the micro computer section 3 by sending and receiving the control information Scc and outputs the recording information thus processed to the information recording and reproducing apparatus SR through the network B. Both of an image information piece and a voice information piece as digital information are contained in the output information Sdp.
   According to the above-described sequential operations, the image information included in the digital information thus received is outputted to the information recording and reproducing apparatus SR while checking and conducting by an outside display (not shown) and the like.
   The microcomputer 3 receives an infrared ray IR which is emitted from the remote control section 12 by the remote controller light receiving section 11 in correspondence with a content of operation for controlling recording process conducted by the remote control section 12, and thereby generates the control information pieces Scn and Sco and the like, outputs these to the corresponding constitutional components corresponding thereto, and totally control the above-described recording process.
   On the other hand, as shown in Figure 3, the information recording and reproducing apparatus SR is made up of the HSI section 20 which is directly connected to the network B, the reproduction control section 21, the microcomputer 23, the hard disc section HD in which a hard disc HD for recording the digital information is recorded in a recording format shown in Figure 4, a portable remote controller 26, and a remote controller receiving section 25 which receives an information piece sent from the remote controller 26 as an infrared ray and the like.
   Next, the entire operations will be described.
   First, in use of the information recording and reproducing apparatus SR, the recording information Spd being the digital information which is sent from the set top box ST through the network B is received and recorded into the hard disc HD.
   At the time of recording, when an operation of starting the recording process is first conducted by the remote control section 26, the microcomputer 23 generates the control information Scc on the basis of the operation information Sop outputted from the remote controller light receiving section 25 by receiving the infrared ray that is emitted from the remote controller 26 in correspondence with the starting operation so as to obtain the digital information which is designated in the starting operation and record it into the hard disc HD, and outputs the control information Scc into-the HSI section 20.
   Accordingly, the HSI section 20 provides an interface process in a manner of digital to the recording information Spd which is sent under control of the microcomputer 3 upon receipt of the control information Scc and outputs it to the recording section 22.
   Accordingly, the recording section 22 extracts a digital information piece which should be recorded into the hard disc HD which is previously selected out of the recording information Spd and outputs it to the hard disc section 24 including the hard disc as the recording information Sr.
   Accordingly, the hard disc section 24 records the recording information Sr including necessary digital information described above into the integrated hard disc HD under a control by the microcomputer 3 which is driven by sending and receiving the control information Ssh.
   Next, an operation of reproducing the digital information which is recorded into the hard disc HD as described above will be described.
   At the time of reproduction, when an operation of starting the reproducing process is instructed through the remote control section 26, an infrared ray IR which is emitted from the remote control section 26 in correspondence with the starting operation is received by the remote controller light receiving section 25, the microcomputer 23 generates the control information Ssh so as to detect the digital information designated by the starting operation and outputs it to the hard disc section 24.
   Accordingly, the hard disc section 24 detects the digital information which is designated by the control information out of the hard disc HD and outputs it to the reproduction control section 21.
   Further, the reproduction control section 21 provides a reproduction process which is previously set up to the digital information which is contained in the detecting information Sp, generates the reproduction process information Spp and outputs it to the HSI section 20.
   The HSI section 20 provides an digital interface process to the reproduction information Spd under a control of the microcomputer 23 by sending and receiving the control information Scc and outputs this to a digital television set and the like which is not shown and provided outside as output information Sdp, being the digital information. In the output information Sdp, both the image information and the voice information are included as the digital information.
   Next, the recording format which is used at the time of recording the digital information to the hard disc HD in the information recording and reproducing apparatus SR having the above structure is concretely described in reference of Figure 4. The recording format shown in Figure 4 is a logic recording format which is used at the time of recording the digital information to the hard disc HD. Further, Figure 4 is to schematically and hierarchically show a recording format after recording the digital information into the hard disc on the basis of the recording format.
   Meanwhile, as for the physical format used at the time of recording into the hard disc HD of the digital information, a well-known physical format, used for the hard disc HD, is used as is.
   In the beginning, summary of various concepts which are adopted in the recording format in order to efficiently manage the content of the recorded digital information, which contains both of voice information and an image including a static image and a dynamic image, and a recording mode, will be described as a premise for understanding the recording format.
   First, in the following recording format, a concept of "unit" is used as a measure for handling the recorded digital information. Namely, "unit" is a piece of digital information which is to be recorded into the hard disc HD in a manner of continuous time. More concretely, for example, when a piece of the digital information is broadcasted by digital broadcast such as a Broadcast Satellite (BS) digital broadcast, an event in the digital broadcast is defined as one unit.
   Second, in the following recording format, during for example the digital broadcast, a concept of directory is used at a portion of PID which stores an image information and the like of the transport stream of the broadcasting airwaves to be described below, which portion is made up of the same packets in accordance with an intention on the sender side. In other words, the term "directory" represents a zone which is specified by one unit in its entirety or a part of the unit, which unit is occupied by the same PIDs.
   Third, in the following recording format,
   a concept of application GOP is used for showing a zone of transferring GOP which is mentioned in the MPEG standard within the directory.
   Next, on the basis of various concepts described above, a logical recording format related to the embodiment will be described.
   As shown in Figure 4, on the hard disc HD with the necessary digital information recorded thereon, unit information INF being a program control information in correspondence with each of the above described units, and a single or a plurality of stream information pieces SOB, which are actually digital information pieces themselves, are recorded.
   Next, as shown in Figure 4, the above unit information INF is an information piece related to the above unit. The unit information is made up of a preliminary information piece RSV (4 bytes) that relates to recording of the unit and is unnecessary for the control, a programstarting time information EST piece (5 bytes) that shows a broadcast starting time on airwaves of the recorded event, a program broadcasting time information piece EDUR (3 bytes) for showing a broadcasting time on airwaves of the recorded event, a directory number information piece DN(2 bytes) that shows the number of the directories which are allocated for each identification number PID of the packets which transport image information of a transport stream (hereinafter appropriately referred to as TS) with respect to the unit at the time of broadcasting the digital information, directory reference position information pieces DS1 to DSn(respectively 4 bytes) for showing a position of the directory information (to be described below), being attribute information and the like with respect to each of the directories, from the top, and the directory information pieces DIF1 to DIFn. At this time, the information related to the present invention is the above described program starting time information piece EST and the program broadcasting time information piece EDUR.
   Next, a detailed structure of each of the directory information pieces will be described.
   As shown in Figure 4, the directory information pieces DIF are respectively made up of a directory size information piece DS (4 bytes) showing the number of the TS packets included in the corresponding directory, a directory display time information piece DPTM(4 bytes) that shows the total display time of an image identified by a video PID, the image is image information included in each directory, a video packet identifying information piece VID (2 bytes) that shows the number PID for identifying a packet which transports a unique image information piece among the directories, a frame code information piece FC (1 byte) that shows a basic display frequency of basic information, a preliminary information piece RSV(1 byte), a packet pointer PPT(4 bytes) that shows a position where an existence of a TS packet is first recognized in use of the byte number from the tops of directories when each directory is recorded, a GOP packet pointer GPP (4 bytes) that shows a position where an existence of an application GOP is first recognized in use of the packet number from the tops of directories when each directory is recorded, a pointer table number information piece PTN that shows the number of applications GOP included in each directory, and pointer tables PT1 to PTm that show attribution information and the like of each application which is included in the directories.
   Further, a detailed structure of the pointer table will be described as follows.
   AS shown in Figure 4, the pointer table PT is made up of a GOP size information piece GPSZ (4 bytes) that shows the packet number included in the application GOP, a display time information piece PBTM (2 bytes) that shows the total display time of the image information which is identified by the GOP size information piece GPSZ (4 bytes) and a first reference image size information piece FESZ (2 bytes)that shows the number of packets counted from the first packet of the application GOP until the last packet including the first reference image in the application GOP.
   Further, as for the relationship between the recording format (logical format) and a physical format of the hard disc (HD) shown in Figure 4, one stream information piece SOB includes one of a plurality of aligned units ALU sections of information on the hard disc HD as shown in Figure 5. Further, one aligned unit ALU is made up of one or a plurality of sectors having the information amount of 512 bytes in an ordinary hard disc HD. One sector SR does not belong to adjacent two aligned units, and one aligned unit ALU does not belong to adjacent two pieces of stream information.
   Further, the one stream information piece SOB is ordinarily recorded so as to correspond to the above event.
(II) Embodiment of the present invention
   Next, the receiving process and the recording process of the digital broadcast according to the present invention, which processes are executed in the broadcast receiving and recording system S having the above structure will be specifically described in reference of Figures 6 to 13.

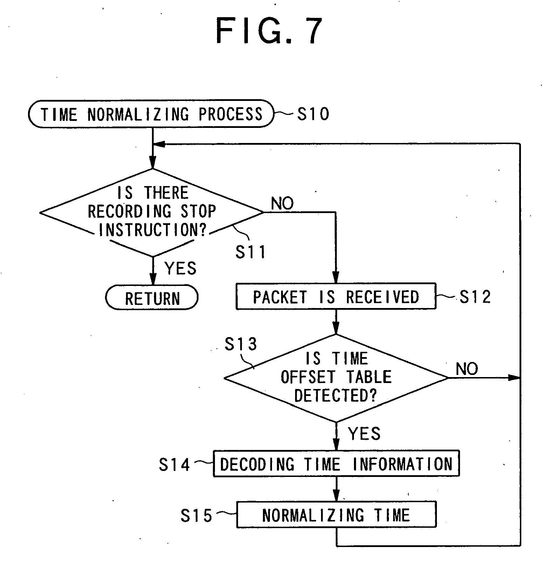

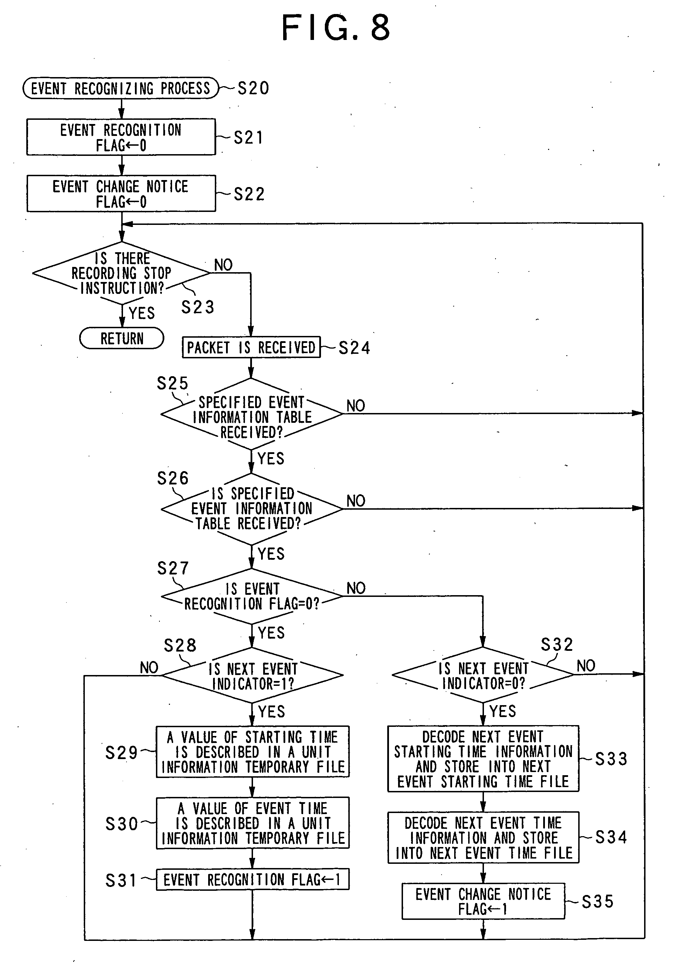

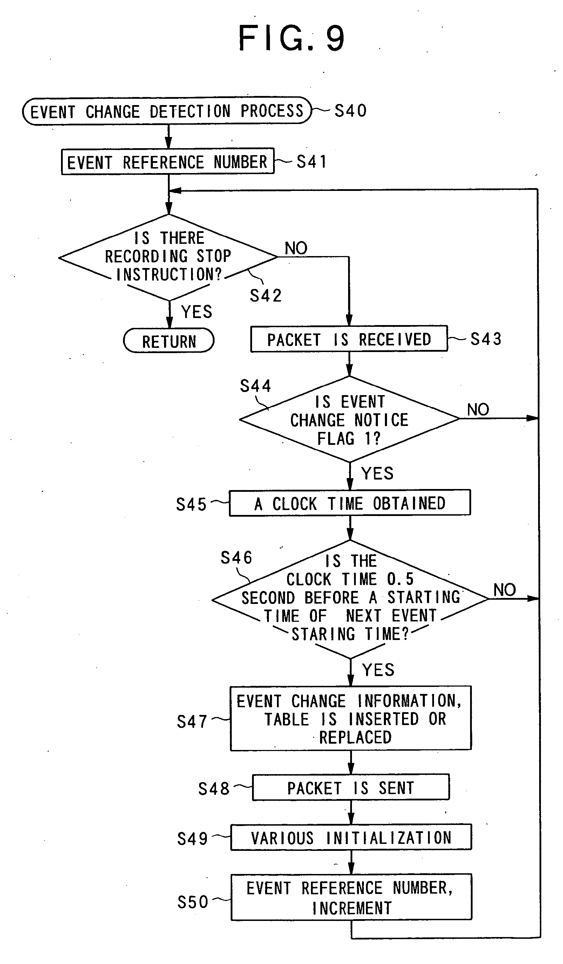

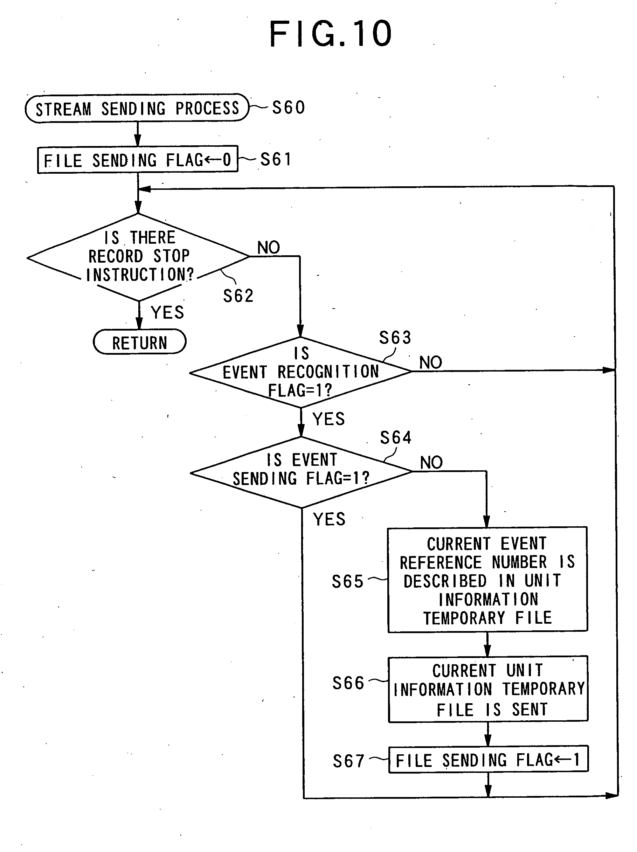

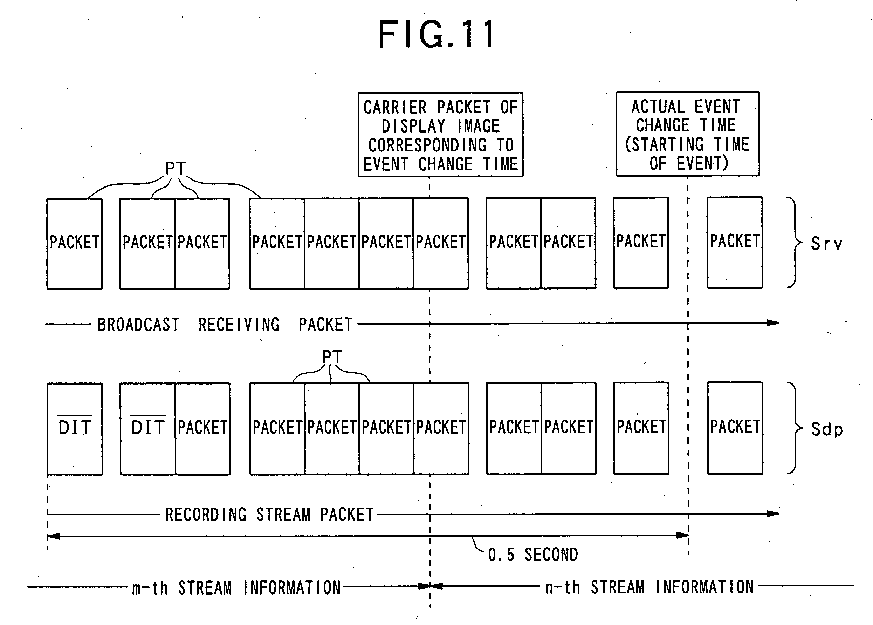

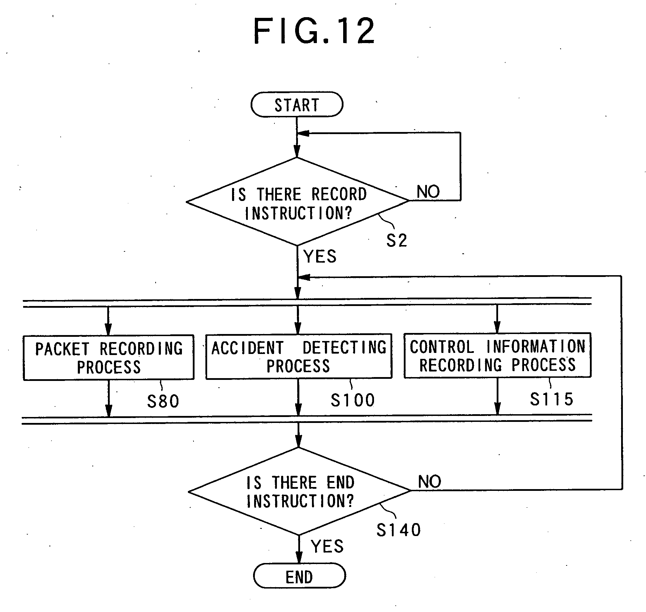

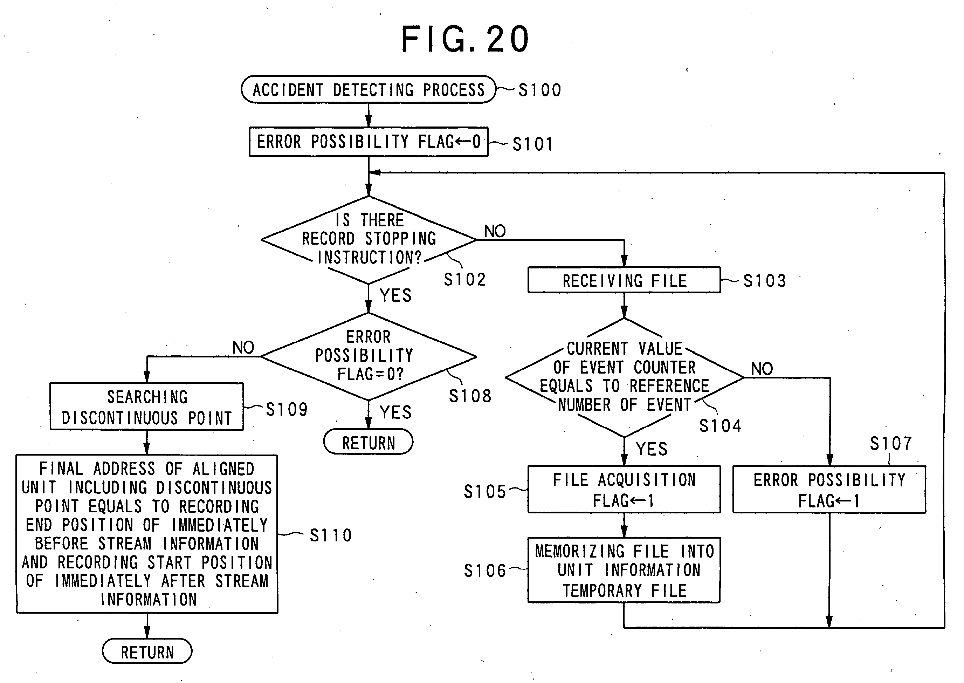

As described below, in the broadcast receiving and recording system S, when digital information included in airwaves of received digital broadcast is converted to a recording stream for sending to the information recording and reproducing apparatus SR, a change point (more specifically a change time) of an event in a transport stream of the received airwaves is detected and reflected into the recording stream to be generated mainly in the process of generating the recording stream in the set top box ST so as to assuredly reflect the information showing a point of change (a change point) of the events into the recording stream for the information recording and reproducing apparatus SR.
(A) Embodiment of set top box
   First, in reference of Figure 6, an entire structure of the two processes which are conducted in the set top box ST will be described. Figure 6 is a flow chart for showing the entire processes.
   As shown in Figure 6, in the set top box ST according to the embodiment, the received digital broadcast is confirmed whether or not the operation of outputting into and recording from the information recording and reproducing apparatus SR is conducted by the remote controller section 12 (Step S1), and the process remains when it is not conducted ("NO" in Step S1). When it is conducted ("YES" in Step S1), a time normalizing process (Step S10) for normalizing a system clock (not shown) which is included in the micro computer 3 in the set top box 3 in use of the time information included in the received digital broadcast (more specifically time information which is counted by a standard clock inside a broadcasting station which broadcasts the digital broadcast), an event recognizing process (Step S20) for recognizing a start time and the like of each event which are included in the received digital broadcast, an event change detection process (Step S40) for detecting the recognized change point of the event, and a stream sending process (Step S60) for sending the recording process to which the change point is reflected to the information recording and reproducing apparatus SR.
   Further, it is checked whether or not an operation of ending an output process is conducted in the remote control section 12 (Step S70), and when if it is not conducted (NO in Step S70), processes of Steps S10, S20, S40 and S60 are continuously conducted independently and mutually in parallel. Meanwhile, when if the ending process is conducted (YES in Step S70), a process in the set top box ST according to the embodiment is completed.
   Next, processes of the above described Steps S10, S20, S40 and S60 are respectively described in detail.
   First, as for the time normalizing process in the above Step S10 will be described in reference of Figure 7. Figure 7 is a flow chart for showing the time normalizing process.
   As shown in Figure 7, in the time normalizing process (Step S10) according to the embodiment, it is checked whether or not an operation of stopping the receiving and recording process according to the embodiment is constantly monitored by a remote control section (Step S11). When the operation is conducted (YES in Step S11), a process transfers to Step S70 shown in Figure 6. On the contrary, if the operation is not conducted along (NO in Step S11), a packet within the transport stream as the digital broadcast is received (Step S12). It is checked whether or not the time information which is counted by the standard clock in the broadcasting station which has broadcasted the digital broadcast is included in this packet for example in a form of a time offset table and the like(Step S13).
   Further, when the time information is not included therein (NO in Step S13). The process returns to Step S11, and the following process is repeated. Meanwhile, when the time information is included in the packet which the time information receives (Step S12) along YES in Step S13, the time information is decoded by the microcomputer 3 (Step S14) . Thereafter, the system clock which indicates the standard time of the operation of the set top box ST inside the microcomputer 3 is normalized (Step S15) so as to match the time information thus decoded. The process returns to the above Step S11, and the previous process is repeated.
   Next, the event recognizing process in Step S20 will be described in reference of Figure 8. Figure 8 is a flowchart for showing the event recognizing process.
   As shown in Figure 8, in the event recognizing process (Step S20) according to the embodiment of the present invention, first an event recognition flag, which is a parameter for showing whether or not the recognition of the new event is completed, in a register (not shown) and the like in the microcomputer 3 at a time when the microcomputer 3 is initialized in Step S21, and the event change notice flag, which is a parameter for showing whether or not preparation of notifying a change point for changing the event to the information recording and reproducing apparatus SR by adding the change point to the recording stream of the information towards the information recording and reproducing apparatus SR is completed, is initialized (Step S22).
   After the initialization of the flags is completed, it is constantly monitored.that an operation of stopping the receiving and recording process is done by the remote control section 12 (Step S23) . When the operation is done (YES in Step S23), the process moves to the process of Step S70 shown in Figure 6. Meanwhile, when the operation is not conducted (NO in Step S23), a packet in the transport stream as a digital broadcast is received (Step s24). It is checked whether or not an event information table having a predetermined and specific PID is received in the packet (Step S25).
   Here, the event information table includes attribute information showing attributes of each of events in on-air digital broadcast, broadcast start time information representing the broadcast start time of the event, broadcast time information representing a requisite time for broadcasting the event and the like are included along with a specific PID so as to be mutually distinguishable event by event. Therefore, in the present invention, it is judged that the event which is currently received is changed to the other event in use of the broadcast start time information and the broadcast time information.
   In other words, in the judgment of Step S25, when the specified event information table is not received (NO in Step S25), the process returns to the above Step S23 and the process by the time is repeated by returning to the process of the above Step S23. Meanwhile, when it is received (YES in S25), it is checked whether or not the event information section having the predetermined and specific table ID within the received specified event information table is received (Step S26).
   Here, the event information section includes the attribute information, the broadcast start time information, and the broadcast time information out of the event information table, along with the specific table ID so as to be mutually distinguishable event by event, wherein the broadcast start times and the broadcast times of each of the events are obtainable event by event.
   When the specified event information section is not received in the judgment (NO in Step S26), the process up to the present is repeated after returning again to the process of the above Step S23. When it is received (YES in Step S26), it is confirmed whether or not the value of the event recognition flag is "0" or not, namely whether or not the event itself of the digital broadcast is yet recognized, at a time when the event information section is received (Step S27).
   In the judgment of Step S27, when the value of the event recognition flag is "0", namely when the currently broadcasted event is not recognized (YES in Step S27), it is confirmed whether or not the next event indicator showing that the obtained event information is a program which is currently broadcasted is "1" in the transport stream that is received (Step S28).
   Then when the next event indicator is not "1", in other words it is not the currently received information (NO in Step S28), since it is impossible to obtain a change point of the currently received event(information such as an end time) is not obtainable, the process returns to the above Step S23 and the process up to the present is repeated. Meanwhile, when the next event indicator is "1", namely when it is the currently receiving event information (YES in Step S28), since a change point of the currently receiving event (information such as the program starting time and the ending time) is obtainable, the value of the broadcast starting time information piece corresponding to the currently receiving event is received from the above event information section and described in a unit information temporary file which is formed inside a memory (not shown) in the microcomputer for sending to the information recording and reproducing apparatus SR (Step S29). In a manner similar thereto, the value of the broadcasting time information piece corresponding to the current event is obtained from the above event information section and described in the unit information temporary file (Step S30). According to these processes, the above event flag is changed to "1" (Step S31) to show that the currently receiving event is recognized. Then the process returns to the above Step S23 and the processes up to the present are repeated.
   On the other hand, in judging Step S27, when the value of the event recognition flag is "1", namely when one event is currently recognized by the processes of the above Steps S28 to S31 (NO in Step S27), it is confirmed whether or not the next event indicator is "1" inside the received transport stream (Step S32).
   Then when the next event indicator is not "0"; namely it is not an information piece which follows the currently received event (NO in Step S32), since it is impossible to obtain the starting point (information such as program starting time) of the event next to the currently receiving event, the process up to the present is repeated after returning to the process of the above Step S233. Meanwhile, when the next event indicator is "0" in a case where the information piece to be treated is the information piece next to the currently received event along YES in Step S32, the starting point of the event next to the currently received event (information such as the program starting time) is obtainable, the value of the broadcast starting time information piece corresponding to the event next to the currently receiving event is obtained from the above event information section and described in a next event disclosure time information file, which is formed in a memory area (not shown) in the microcomputer 3 and provided so as to be sent to the information recording and reproducing apparatus SR (Step S33) . In a similar manner thereto, the value of the broadcast time information piece corresponding to the next event is obtained from the above event information section and described into the next event time information file, which is formed inside the memory region (not shown) of the microcomputer 3 and provided so as to be sent to the information recording and reproducing apparatus SR (Step S34). According to these processes, it is established that the information of the event following the currently receiving event is obtained and the information related to the change point of the currently receiving event is ready for notification, the event change notice flag is changed to "1" (Step S35), and the process returns to the above Step S23, and the processes up to the present are repeated.
   Next, the event change detection process as in Step S 40 will be described in reference of Figure 9. Figure 9 is a flowchart for showing the event recognizing process.
   As shown in Figure 9, in the event change detection process according to the embodiment in Step S40, first an event reference number flag as a parameter for showing the number of events which are sent out of the set top box ST as the record stream is initialized (Step S41).
   Then after initializing the event reference flag, it is constantly monitored whether or not an operation of stopping the recording and receiving process is conducted in the remote controller section 12 (Step S42). When the operation is conducted (YES in Step S42), the process moves to Step S70 shown in Figure 6. On the other hand, when,the operation is not conducted (NO in Step S42), a packet in the transport stream is received as the digital broadcast (Step S43). Then it is confirmed whether or not preparation of notifying to the information recording and receiving apparatus SR is completed while including the change point for changing the event into the recording stream for the information recording and reproducing apparatus SR (Step S44). When the value of the event change notice flag is not "1" (NO in Step S44), since it is not possible to notify the change point, the process returns to the above Step S42. Then the process is repeated again as before. Meanwhile, when the value of the event change notification flag is "1" (YES in Step S44), the time of the system clock which is normalized by the process in Step S10 (Step S45) . Further, the obtained time is confirmed whether or not a time of 0. 5 seconds earlier than the time described in the next event disclosure information file (Step S46). The time of "0.5 seconds" corresponds to a reproduction time of an image and a sound, which are included in one GOP in an MPEGmethod used in digital broadcast.
   Accordingly, when if the obtained time does not show the time of 0.5 seconds earlier than the time described in the next event disclosure time information (NO in Step S46), since the event change point does not reach the event change point (change time), the process returns to the process of Step S23. Meanwhile, when the obtained time shows a time of 0.5 seconds earlier than the time, described in the next event disclosure time information (YES in Step S46), it is established that a time for inserting the event change information table arrives so as to directly insert the event change information table into the recording stream for sending to the information recording and reproducing table or replace a packet which is to be sent and exists in the recording stream at the present time with the event change information table and insert it (Step S47). Further, the above event change information table is an information table which is described so as to recognize a change of the event in the information recording and reproducing apparatus SR.
   After the insertion and replacement of the event change information table are completed, a packet including the event change information table is sent to the information recording and reproducing apparatus SR as a part of the recording stream (Step S48). A file sending flag, which shows that the above unit information INF on which the contents of the change notice flag, the event recognition flag and the event information table are reflected, is sent by initializing the file sending flag to be describedbelow (Step S49). Then the event reference number flag is increasedby"1" (Step S50). The process up to the present is repeated after returning to the process of Step S42 so as to conduct a process, which is shown in Figure 9 and has been described, with respect to the next event.
   Next, the stream sending process as the above Step S60 will be described in reference of Figure 10. Figure 10 is the flow chart for showing the stream sending process.
   As shown in Figure 10, in the stream sending process (Step S60) according to the Embodiment, first the file sending flag is initialized (Step S61), and thereafter it is constantly monitored whether or not the receiving and recording process, which is described in the Embodiment, is operated to stop by the remote controller section 12 in Step S62. When the operation is conducted along (YES in Step S62), the process moves to Step S70 shown in Figure 6. When the operation is not conducted (NO in Step S62), the process moves to Step S70 shown in Figure 6. Next, it is confirmed whether or not the value of the event recognition flag is "1", namely whether the currently receiving event is recognized (Step S63), when it is not yet recognized (NO in Step S63), the process returns to Step S62 and the process up to the present is repeated.
   Meanwhile, when the value of the event recognition flag is "1" and the currently receiving event is recognized (YES in Step S63), it is confirmed whether the value of the event change information table is "1" or not, namely whether or not the event change information table showing the change point of the event is already sent (Step S64). When it is already sent (YES in Step S64), the process returns to the above Step S62 so as to repeat the above-described process for the next event. On the other hand, when it is not sent (NO in Step S64), the value of the event reference number flags is described into the unit information temporary file (vide Steps S29 and S30 in Figure 8) (Step S65), and thereafter the unit information temporary flag is sent as the above unit information INF to the information recording and reproducing apparatus SR (Step S66). Thereafter, the value "1" of the file sending flag is renewed to "1" and the process returns to Step S62. Then the above-described process is repeated with respect to the next event.
   Finally, modes of the recording stream of the above described Steps S1, S10, S20, S40, S60 and S70 are specifically described in reference of Figure 11. Meanwhile, Figure 11 is a schematic view of comparing a packet RT in the transport stream which is broadcasted as digital broadcast (the upper row of Figure 11) and a packet PT in the recording stream corresponding to the output information Spd on a time axis.
   According to the above described sequential processes, as shown in Figure 11, at a time position in the recording stream which corresponds to a time 0.5 seconds earlier than the change time of the event in the transport stream as shown in Figure 11, the event change information table DIT for showing the above mentioned change time of the event is inserted. In order to enhance a detection accuracy of the event change information table DIT in the recording and reproducing apparatus SR, it is preferable to insert two sequential packets corresponding to the event change information table into the recording stream. When the change point of the stream information SOB as the recording stream is in agreement with a time of carrying the packet in which a display image is carried in correspondence with the event change time as shown iri Figure 11.
(B) Embodiment of a recording operation in an information recording and reproducing apparatus
   Next, a recording process of the information recording and reproducing apparatus SR at the time of recording the recording stream, which is sent from the above-described set top box ST into the above-described hard disc in use of the recording format shown in Figure 4, will be described in reference of Figures 12 and 20.

First, the recording process is described in reference of Figure 12. Figure 12 is a flow chart for showing the recording process in its entirety.

As shown in Figure 12, in the recording and reproducing apparatus SR according to the embodiment, it is confirmed whether or not an operation of recording output information Sdp which has been sent from the set top box ST is conducted in the above remote controller 26 (Step S2). If it is not conducted (NO is Step S2), the process remains the same. When if the operation is conducted (YES in Step S2), a recording process for recording the output information Sdp thus transmitted is recorded into the hard disc HD (Step S80), an accident detecting process for detecting whether or not an unexpected accident such as a drop of packet occurs in a transmitting process from the set top box ST in recording the above output information Sdp (Step S100), a program management information recording process for recording unit information INF as a program management information having a content into which a state of the detected accident is reflected onto the hard disc HD (Step S115) are independently and mutually conducted in parallel.

Thereafter, it is confirmed whether or not an operation of ending the recording process is conducted through the remote controller 26 (Step S140), when it is not conducted (NO is Step s140), the processes of Steps S80, S90 and S115 are successively conducted. On the other hand, when the ending process is conducted (YES in Step S140), the process in the information recording and reproducing apparatus R according to the embodiment is completed.

Next, the processes of the above-described steps S80, S90 and S115 are described in detail.

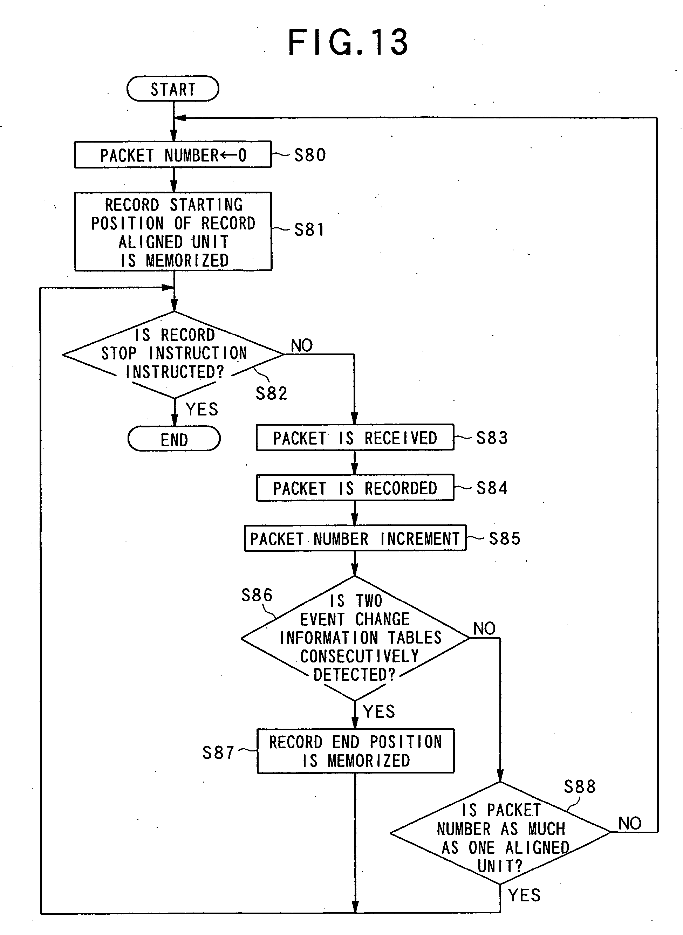

First, the packet recording process in Step S80 is described in reference of Figure 13. Figure 13 is a flow chart for showing the packet recording process.

As shown in Figure 13, when the recording stream from the set top box is recorded in the hard disc HD in the information recording and reproducing apparatus SR of the embodiment, first a reference number flag showing the number of the packets PT which are recorded into the hard disc HD is initialized (Step S80). Next, the recording start position of the stream information SOB (Figures 4 and 5) including an aligned unit ALU (Figure 5) on the hard disc HD is obtained based on the hard disc HD and temporarily memorized into a memory (not shown) inside the microcomputer 23 on the basis of the hard disc HD in Step S81. Further, it is constantly monitored whether or not an operation of stopping a recording process according to the embodiment is operated to stop the recording process of the embodiment by the remote control section 26 (Step S82). When the operation is conducted along YES in Step S82, the recording process is terminated. On the other hand, when the operation is not conducted (NO in Step S82), a piece of the packet PT, which is sent as the recording stream, is received (Step S83) . Further, the information in the received packet is recorded at a position of record in the hard disc HD (Step S84) . Then the above-mentioned reference flag is increased by "1" (Step S85) .

Further, in the example shown in Figure 11, it is confirmed whether or not two consecutive event change tables DIT are detected in a case where the two event change information tables DIT are inserted into the recording stream (Step S86).

In the judgment of Step S86, when the two consecutive event information tables DIT are detected (YES in Step S86), a record end position of the stream information SOB on the hard disc HD is obtained on the basis of the hard disc HD and temporarily memorized on the memory inside the microcomputer 23 (Step S87) . Then the process moves to the above-mentioned Step S82 so as to receive next packet from the set top box ST.

Meanwhile, in the judgment of Step S86, when the two consecutive event change information tables are not detected (NO in Step S86), it is confirmed whether or not the value of the reference number flag showing the packet number, which is received in the one aligned unit at the present time, reaches a predetermined set number or not (Step S88). When the value of the reference flag does not reach the packet number (NO in Step S88), the process moves to the above-mentioned Step S80 so as to receive a next packet PT from the set top box ST. On the other hand, when the value reaches the packet number (YES in Step S88), the process moves to Step S80 so as to repeat the above process for the next aligned unit ALU.

Further, although it is not shown in Figure 11, when the recording of all stream information pieces SOB to the hard disc HD is completed, the unit information INF shown in Figure 4 is formed in use of the unit information temporary file which is sent in the process shown in Step S60 of Figure 10, and the information is recorded into the hard disc HD along the recording format shown in Figure 4.

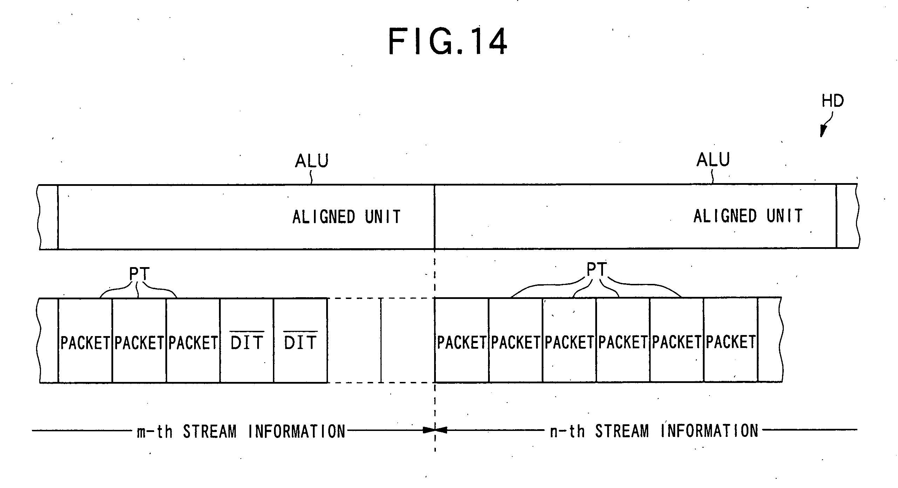

Next, a mode on the hard disc HD which records the recording stream according to the process shown in Figure 13 will be specifically described in reference of Figure 14. Figure 14 schematically shows a relationship between the aligned unit ALU and the packet PT on the hard disc HD on the time axis after the digital information is recorded.

According to the above-described sequential process, as shown in Figure 14, a boarder of the one aligned unit ALU is in agreement with the stream information SOB, and each packet PT is recorded.

Namely, according to the recording process shown in Figure 13, when the event change table DIT is resultantly received in the information recording and reproducing apparatus SR, the recording stream following the next packet PT is recorded from the top of the aligned unit ALU which is unrecorded. At this time, when it is tried to bring the border of the stream information SOB in agreement with the border of the aligned unit ALU, as shown in Figure 14, the event change information table is inserted after inserting a requisite number of null packets including no information so as to make the border of the packet PT in agreement with the border of the aligned unit ALU.

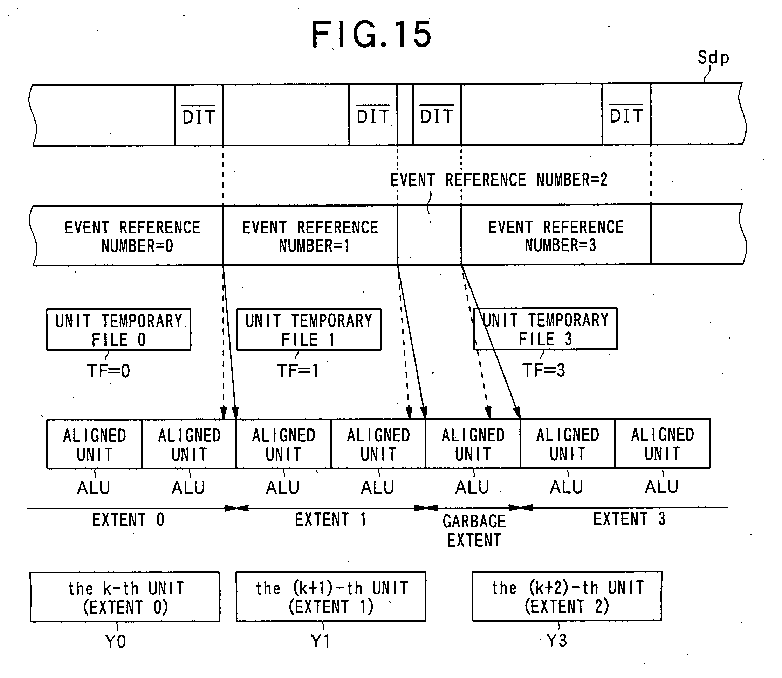

Next, a mode of stream information in various stages in a case where the unit information temporary file is normally received between the stream sending process shown in Figure 10 (especially the processes in Steps S65 and S 66 in Figure 10) and the packet recording process shown in Figure 13 (especially the processes in Steps S 83 and S 84 in Figure 10) are normally received is described in Figure 15. Figure 15 schematically shows the above mode.

First, when the unit information temporary file is normally received, as shown in the top end of Figure 15, it is sent in a state where the event change information table DIT is inserted at each change of content as the event in the stage of the output information Sdp which is outputted from the set top box ST.

In this, in a case shown in the top end of Figure 15, the third event change information table DIT on the observers left is a unit, of which EIT (abbreviation thereof is EIT and information showing an attribute and so on of each event) contained in the original TS is not obtainable by some reason when the output information Sdp is generated, and is inserted in a short time after the immediate prior event change information table (the second event information change table DIT counted from the observer's left in the top end of Figure 15) is inserted.

On this occasion, when considered along with the event change detection process shown in the above Figure 9, the value of the event reference number flags corresponding to the each event change information table DIT is "0", "1", "2" and "3" in the sequential manner from the observer's left as shown in the second column from the top on Figure 15.

At this time, since the above EIT is not contained in the output information Sdp corresponding to the event reference flag "2", the unit information temporary file corresponding to the event reference flag "2" is not resultantly generated. Therefore, in a case shown in Figure 15, the number of the unit information temporary file which is generated in correspondence with the output information Sdp outputted from the set top box in Figure 15 are three, namely a unit information temporary file TFO corresponding to an event reference number flag "0"; a unit information temporary file TF1 corresponding to an event information reference flag "1", and a unit information temporary file TF3 corresponding to an event information reference flag "3" as shown in the third column from the top on Figure 15.

When such the output information Sdp is recorded onto a free space which is continuous on the hard disc HD, the mode is in a shape such that borders of aligned units ALU are respectively formed at change points of events as shown in the second column from THE top on Figure 2. At this time, the aligned units belonging to each of the event reference number flags form "extent", being a pack of information corresponding to the above stream information SOB in the information recorded on the hard disc HD. Further, output information Sdp, without a unit information temporary file TF formed therefrom, forms a garbage extent, being unnecessary information on the hard disc HD.

As such, as shown in the bottom end column of Figure 15, the output information pieces Sdp corresponding to each of the extents respectively form the units Y on the logical format which respectively correspond to each of the events on the hard disc HD.

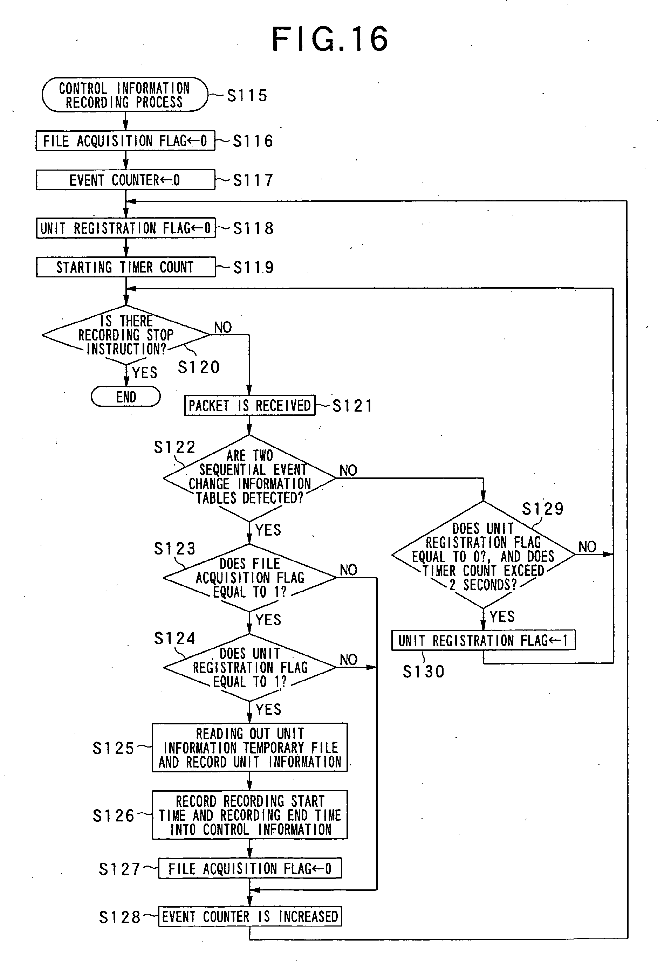

Next, as shown in Figure 15, a recording process of the unit information INF the program management information on an occasion that receiving the requisite information Sdp is normally received will be specifically described in reference of Figures 16 to 18.

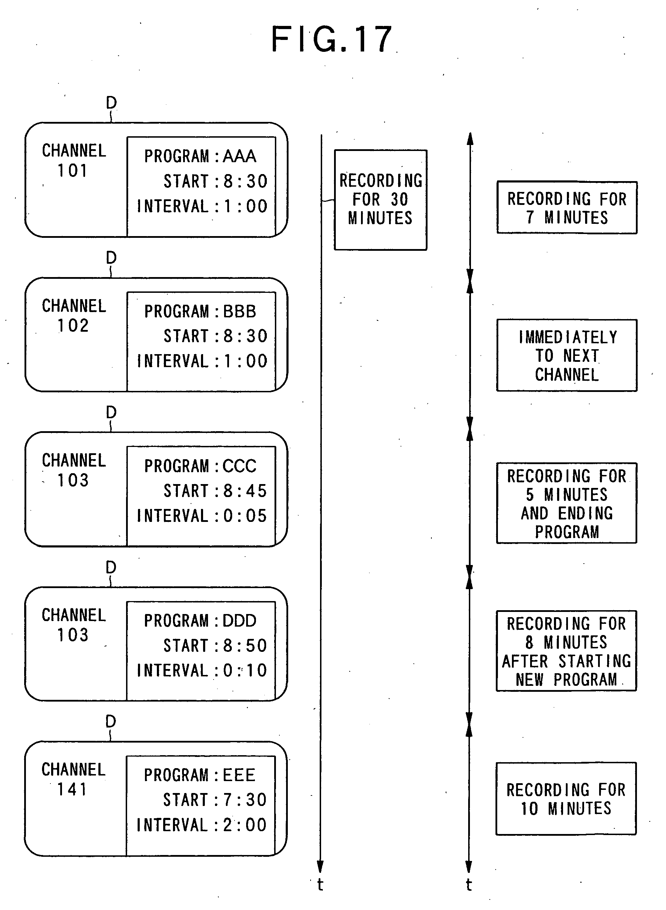

Meanwhile, Figure 16 is a flowchart for showing the recording process. Figures 17-18 show examples of a reproduction control screen which is displayed on a display device (not shown in Figure 3) when the output information Sdp, which is recorded onto the hard disc HD in use of the unit information INF recorded onto the hard disc HD, is reproduced.

As shown in Figure 16, in the recording process of the unit information INF, first a file acquisition flag, which shows that one file (including a unit information temporary flag, hereinafter the definition is the same) is normally received, is initialized (Step S116). An event counter, being a parameter which increases at each receipt of one event of output information Sdp aside from the set top box ST, is initialized in the information recording and reproducing apparatus SR(Step S117). Further, a unit registration flag, being a parameter indicating whether or not the unit information INF is in a condition that the unit information is able to be registered onto the hard disc HD, is initialized (Step S118). Counting of the timer used for a recording clock signal or the like in the information recording and reproducing apparatus SR is started (Step S119).

Next, it is confirmed whether or not an operation of stopping a recording process of the recording stream onto the hard disc is conducted in the remote control section 26 (Step S120). When the operation is conducted (YES in Step S120), the process directly goes to Step S140 shown in figure 12. On the other hand, when the process is not conducted (NO in Step S120), next a requisite packet contained in the output information Sdp, which has been transmitted, is received.

In the example shown in Figure 11, when two event change information table s are continuously inserted into the recording stream, it is confirmed whether or not the two continuous event change tables DIT are detected (Step S122).

In the judgment of Step S86, when the two continuous event change tables DIT are detected (YES of Step S122), next it is confirmed whether or not the above file acquisition flag is "1"(Step S123).

Then when the file acquisition flag is "1" (YES in Step S123), it represents that all necessary reproduction information pieces Sdp are received without causing a packet drop to be described below. Next, it is confirmed whether or not the unit registration flag is "1" so as to record the received file to the hard disc HD (Step S124). When the unit registration flag is "1" (YES in Step S124), the unit information temporary file is read out of the received file and records thus read-out file as the unit information INF(Step S125). The record starting position and the record ending position are recorded (Step S126). The file acquisition flag is initialized (Step S127) . The event counter is incremented by "1" (Step S128). Then the process transfers to the above Step S118 in preparation for receipt of the next packet.

Meanwhile, when the file acquisition flag is not "1" in the judgment of the above step S124 (NO in Step S124), since the information necessary for normally memorizing the unit information INF is not yet received, the process moves to the above Step S128 as-is.

On the other hand, in judging the above Step S122, when two event change information tables DIT are not consecutively detected (No in Step S122), it is then checked whether or not the unit registration flag is "0" and also the above timer count exceeds two seconds (Step S129).

Then when the unit registration flag is not "0" or the timer count does not exceed 2 seconds (NO in Step S129), the process returns to the above Step S120 and packets are continuously received. When the timer count exceeds two seconds (YES in Step S129), the unit registration flag is rendered "1" (Step S130) and packets are continuously received after returning to the above Step S120.

By repeating the processes of from S122, S129 to S130, even when an unnecessary output information Sdp is transferred to the hard disc HD by a station selecting operation in a short time of less than two seconds, for example a skipping operation during the station selecting operation, i.e. a skipping station selection until apredeterminedbroadcasting station is reached, in the set top box ST, the unit information piece representing the unnecessary output information Sdp is not recorded.

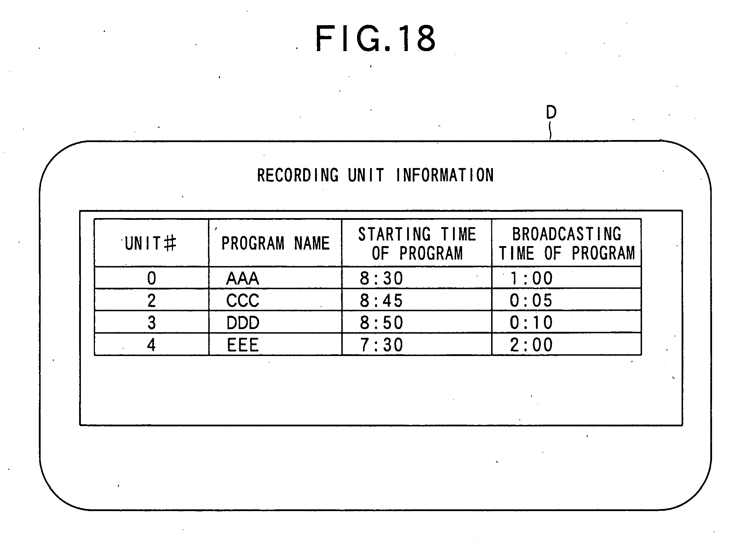

Accordingly, as in a channel selection operation for exemplifying along with a display example on a display D in Figure 17, when for example a program which is broadcasted in channel 101 is recorded for seven minutes, a program broadcasted in channel 102 is then watched for less than two seconds for selecting stations; a program broadcasted in channel 102 is then recorded for five minutes; the recording process is then temporarily ended (stopped) ; a new program which is started in the same channel 103 is then recorded for eight minutes; and a programbroadcasted in channel 141 is then recorded for 10 minutes, the unit information piece INF, which designates that the recording is done, of the program broadcasted in the above channel 102 is not recorded. Accordingly, as the result, a program "BBB" which has been broadcasted in the channel 102 is not displayed at all in the unit information INF after a series of recording information processes is completed, like the unit information on the display D shown in Figure 18.

Meanwhile, the threshold time of "two seconds" used in the judgment of Step S129 in Figure 16 is basically set in an arbitrary manner. More specifically, it may be possible to make a user of the information recording and reproducing apparatus SR arbitrarily set up or to set up in reference of the information amount of an information unit such as a packet on the partial TS.

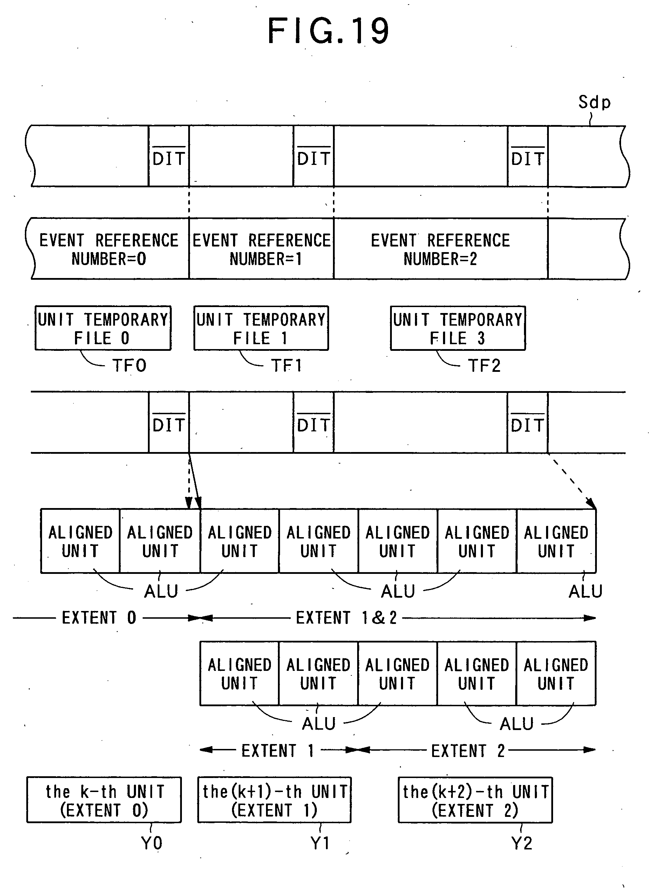

Next, a mode of stream information in each stage in a case where a packet is dropped by a some reason such as a trouble caused on a network B when the unit information temporary file is sent and received between the stream sending process shown in Figure 10 and the packet recording process shown in Figure 13 and thereby the event change information table DIT is not normally sent and received will be described in reference of Figure 19. Figure 19 is a drawing schematically showing the mode.

First, it is assumed that, in the output information Sdp in the stage of outputting from the set top box ST, the unit information temporary file TF0, TF1 and TF2 are respectively formed in correspondence with the event reference number flag, which changes at a timing of inserting each event change information table DIT in a manner similar to the case described in reference of Figure 5 (vide the uppermost column of Figure 19) .

Here, when if a packet including the second event change information table DIT from the reader's left side end is lost in Figure 19 by, for example, a trouble in the network B as shown in the fourth stage of Figure 19, a change point of event in the recording stream is not recognized in the information recording and reproducing apparatus SR which receives such the packet. Therefore, as illustrated in the third stage from the bottom end, aligned units ALU which should be inherently recorded as separate extents of an extent 1 and an extent 2 are recorded as a single extent.

Since the information designating the change point is lost at the time, the event change is not rightly recognized. For example, by a complicated process such that a discontinuous point of the arrival time information, which shows a time when each of the aligned units ALU is inputted into the information recording and reproducing apparatus SR, is detected, a border of the inherent extent is detected as shown in the second stage from the bottom of Figure 19, and it is necessary to reflect the result of the detection on generation of unit information Y.

Therefore, in the information recording and reproducing apparatus SR according to the embodiment, in order to early recognize an accident of packet drop an accident detecting process (Step S100) described below is conducted in parallel with the packet recording process (Step S80).

Next, the accident detecting process will be specifically described in reference of Figure 20. Figure 20 is a flowchart showing the accident detecting process.

As shown in Figure 20, in the accident detecting process, first an error possibility flag is first initialized (Step S101); then it is confirmed whether or not an operation of stopping to record a recording stream to the hard disc in the remote controller 26 (Step S102); and when if the operation is not conducted (NO in Step S102), the unit information INF is formed in use of the unit information temporary file which is sent by the process shown in Step S60 (Step S103).

Then a present value of the event counter is compared with a value of the event reference number flag corresponding to the output information which is currently received, and it is confirmed whether or not the values are equal (Step S104) .

Accordingly, when the current value of the event counter does not match the value of the event reference number (NO in Step S104), it is assumed that the above described drop of packet possibly occurs, and the above error possibility flag is rendered "1" (Step S107), and the process moves to the above Step S102 for waiting receipt of a next file.

On the other hand, when there is a file in which the current value of the event counter matches THE event reference number flag which is designated by the received unit information INF (Step S104), it is assumed that the output information is normally received at present, the file acquisition flag is rendered "1" (Step S105), and the received flag is recorded as the unit information temporary file on the hard disc HD onto the hard disc HD (Step S106), and the process transits to the following Step S102 for waiting receipt of the next file.

On the other hand, in judging the above Step S102, when an operation of stopping the recording process is instructed onto the remote controller (YES in Step S102), it is then confirmed whether or not the value of the prospect flag is "0" (Step S108). When the value of the error possibility flag is "0", (YES in Step S108), it means that all necessary output information Sdp is recorded without causing a drop of packet and therefore the process transits to Step S140 shown in Figure 12 as-is.

Meanwhile, when if the value of the error possibility flag is not "0" (NO in Step S108), the possibility that the packet drop occurs becomes high. Therefore, the discontinuous point at a timing when the drop of packet occurs by a process such as the above-mentioned arrival time information is detected on the hard disc HD (Step S109), and the final address of the aligned unit ALU including the searched discontinuous point is recognized as a record ending position of the stream information SOB immediately before the aligned unit and a record starting position of the stream information SOB immediately after the aligned unit(Step S110), a file system, being management information, is reproduced and the process transfers to Step S140 shown in Figure 12.

As respectively described, according to an operation of the set top box ST and the information recording and reproducing apparatus of the embodiment, the event reference number flag and the event counter are compared, and when these values are different, it is recognized that DIT lacks and and the input information Sdp is inputted, it is possible to assuredly detect an event where the output information Sdp is inputted in a state that DIT lacks.

Further, when THE output information Sdp is inputted in a state that DIT lacks, since a structure of event in the inputted output information Sdp is reconstructed, the information is recorded in a state that the change point of the event accurately reflected.

Further, the change point of the event is detected by detecting the discontinuous point of the arrival time information inside the output information, it is possible to assuredly detect the change point of the event.

Furthermore, when the values of the event reference flag and the event counter are the same, the output information is recorded onto the hard disc as-is. Therefore, a necessary information is recorded into the hard disc at a high rate.

In the above-described embodiment, although a case where the present invention is applied to the information recording and reproducing apparatus SR for recording the recording stream onto the hard disc HD has been described, besides this, it is also possible to apply the present invention to a case where the recording stream is recorded into an optical disk of a large capacity such as a digital versatile disc (DVD), a tape medium and a semiconductor recording medium.

Further, in the above embodiment, although a case where an event change information table DIT is inserted 0.5 seconds earlier than the event change time has been described, it is also possible to insert the event change information table DIT just before the actual change time (vide Figure 11) of the event in addition thereto.

Further, the programs corresponding to the flowcharts respectively shown in Figures 6 to 10 and Figures 12, 13, and 16 are recorded in the recording medium such as a flexible disk and a hard disc or through a network such as an internet. When the programs are read out of a general-purpose CPU and conducted, such the CPU is operated as the microcomputer 3 or 23 according to the present embodiment.

## Claims

1. An information transmitting apparatus comprising:
an adding device which adds border information, which designates a boarder between a partial recording information piece and another partial recording information piece, to recording information, the recording information including a plurality of partial recording information pieces; and
a transmitting device which transmits the recording information with the border information added thereto and transmission order information designating a transmitting order of the partial recording information pieces.

2. An information transmitting apparatus according to claim 1 comprising:
a first transmitting device which transmits the transmission order information using a transmission method by which it is assured that information arrives at where the information is transmitted; and
a second transmitting device which transmits the recording information using a transmission method different from that for the transmission order information.

3. An information recording apparatus which receives input of recording information having a plurality of partial recording information pieces and boarder information designating a border of the partial recording information pieces and transmission order information designating an order of transmitting the partial recording information, and records at least the recording information to a recording medium, comprising:
an erroneous detection detecting device which detects an erroneous detection of the boarder information on the basis of the transmission order information.

4. An information recording apparatus according to claim 3, wherein
the erroneous detection detecting device comprising:
a counting device which counts a number of the border information; and
a comparison device which compares a counted value obtained by the counting device and a value of the transmission order information.

5. An information recording apparatus according to claim 3 or 4, further comprising:
a generation device which generates control information on the basis of the border information;
a correction device which corrects the control information for controlling the recording information that is recorded when an erroneous detection of the border information is detected; and
a recording device which records the control information thus corrected onto the recording medium.

6. An information recording apparatus according to claim 5, further comprising:
an adding device which adds time information to the recording information that is recorded onto the recording medium, wherein
the correcting device detects a discontinuous point of time information, which time information is added to the recording information, and regenerates the control information by regarding the discontinuous point thus detected as a border of the partial recording information piece.

7. "An information transmitting method comprising:
an adding step of adding border information designating a border between a partial recording information piece and another partial recording information piece to recording information which includes a plurality of partial recording information pieces; and
a transmitting step of transmitting the recording information with the border information added thereto and transmission order information which designates a transmission order of the partial recording information pieces.

8. An information recording method which inputs recording information including a plurality of partial recording information pieces, boarder information which designates a boarder of the partial recording information pieces, and transmission order information which designates a transmission order of the partial recording information pieces, and recording at least the recording information onto a recording medium comprising:
an erroneous detection detecting process for detecting an erroneous detection of the border information on the basis of the transmission order information.
